# EUROPÄISCHE PATENTSCHRIFT

(11) **EP 3 351 816 B1**
(45) Veröffentlichungstag und Bekanntmachung des Hinweises auf die Patenterteilung: **16.10.2019**
(21) Anmeldenummer: 18150302.0
(22) Anmeldetag: 04.01.2018
(51) Int. Cl.: F16D 1/10, F16D 3/18

(54) **NABENBAUTEIL FÜR EINE WELLE-NABE-VERBINDUNG, WELLE-NABE-VERBINDUNG, SOWIE VERFAHREN ZUR HERSTELLUNG EINES NABENBAUTEILS**
SHAFT TO COLLAR CONNECTION, COLLAR ELEMENT FOR A SHAFT TO COLLAR CONNECTION AND METHOD FOR PRODUCING A COLLAR ELEMENT
ÉLÉMENT DE MOYEU POUR UNE LIAISON ARBRE-MOYEU, LIAISON ARBRE-MOYEU AINSI QUE PROCÉDÉ DE FABRICATION D'UN ÉLÉMENT DE MOYEU

(30) Priorität: 18.01.2017 DE 102017100944
(43) Veröffentlichungstag der Anmeldung: 25.07.2018
(73) Patentinhaber: Leistritz Extrusionstechnik GmbH, 90459 Nürnberg (DE)
(72) Erfinder: RECHTER, Frank, 97215 Uffenheim OT Welbhausen (DE); WOLF, Sven, 90522 Oberasbach (DE)
(74) Vertreter: Lindner Blaumeier Patent- und Rechtsanwälte

(56) Entgegenhaltungen:
- EP-A1- 0 619 157
- EP-A1- 1 632 331
- DE-A1- 19 842 642

## Beschreibung

Die Erfindung betrifft ein Nabenbauteil für eine Welle-Nabe-Verbindung, umfassend eine in einer Bohrung ausgebildete, sich axial von einem Ende der Bohrung zum anderen Ende erstreckende Innenverzahnung mit mehreren Zähnen und dazwischen vorgesehenen Nuten.

Ein solches Nabenbauteil kommt üblicherweise bei Antriebseinrichtungen zum Einsatz und ist Teil einer Welle-Nabe-Verbindung. Das Nabenbauteil wird auf die beispielsweise angetriebene Welle aufgeschoben, so dass es bei einer Rotation der Welle aufgrund des Ineinandergreifens der Innenverzahnung des Nabenbauteils in die Außenverzahnung der Welle dreht.

Ein Beispiel für eine solche Welle-Nabe-Verbindung ist eine Extruderschnecke, umfassend eine die längslaufende Außenverzahnung aufweisende Extruderwelle, auf der eine Vielzahl einzelner Nabenbauteile hier in Form von Extruderschneckenelementen, die hintereinander angeordnet sind, aufgeschoben sind. Eine solche Extruderwelle wird häufig auch Schneckenschaft genannt. Die Nabenbauteile sind an ihrer Außenseite je nach der bauteilspezifischen Funktion profiliert, sie können als Förderelemente oder Knetelemente oder Ähnliches ausgeführt sein.

Im Rahmen des Betriebs der Antriebseinrichtung, wenn also die Welle aktiv angetrieben wird, kommt es an den Krafteinleitungsstellen der Welle in das oder jedes Nabenbauteil an der Nabenkante des Nabenbauteils bzw. der Welle zu Spannungsspitzen, die zu einer plastischen Verformung im Verzahnungsbereich des Nabenbauteils, also an der Nabenkante selbst, oder der Welle (je nach Materialkombination) bis hin zu einem Versagen führen können. Die Ursache liegt darin, dass an der Nabenkante der Nabenbauteile erhöhte Kräfte auf das Nabenbauteil respektive dessen Innenverzahnung wirken. Der Großteil des von der Welle einzuleitenden Drehmoments wird innerhalb von wenigen Millimetern, gesehen von der Stirnseite des Nabenbauteils, in das Nabenbauteil eingeleitet.

Hierdurch entstehen lokal begrenzt sehr hohe Spannungen, die auch daraus resultieren, dass die Welle zu einem gewissen Grad, insbesondere bei hohen Drehmomenten tordiert, folglich also unterschiedliche Steifigkeiten von Welle und Nabenbauteil gegeben sind. Diese Spannungsspitzen wirken sich auch wellenseitig kritisch aus, da es sich hierbei oft um ein hochvergütetes Bauteil handelt, das hohe schwellende Drehmomente dynamisch übertragen muss. Eine plastische Beschädigung der Welle aufgrund etwaiger Eindruckstellen der bauteilseitigen Innenverzahnung in die Wellenverzahnung führt über kurz oder lang zu einem Versagen der Welle.

Um derartige Spannungsspitzen, resultierend aus der Interaktion der Außenverzahnung mit der Innenverzahnung, zu reduzieren ist es aus DE 10 2011 112 148 B4 bekannt, an einem Nabenbauteil, dort einem Schneckenelement einer Extruderschnecke, an einer Stirnseite an den Zähnen der Innenverzahnung gezielt Material mechanisch zu entfernen, mithin also die Zähne etwas schmäler zu machen respektive die Nuten lokal zu verbreitern. Im aufgesteckten, unbelasteten Zustand ergibt sich folglich in diesem Bereich ein schmaler Spalt oder Abstand zwischen der Außen- und der Innenverzahnung, es liegt folglich kein Kontakt vor. Im Betrieb, selbst wenn es zu einer Wellentorsion kommt, ist nur ein reduzierter Kontaktbereich, so es überhaupt zu einer Anlage kommt, gegeben, worüber etwaige Spannungsspitzen abgebaut werden. Die Herstellung eines solchen Nabenbauteils respektive Schneckenelements ist jedoch aufgrund des gezielten Materialabtrags sehr aufwendig.

Der Erfindung liegt damit das Problem zugrunde, ein Nabenbauteil für eine Wellen-Nabe-Verbindung anzugeben, das demgegenüber verbessert ist.

Zur Lösung dieses Problems ist bei einem Nabenbauteil der eingangs genannten Art erfindungsgemäß vorgesehen, dass die Härte jedes Zahns an wenigstens einem Ende zumindest an einer Zahnflanke niedriger ist als im Bereich der Längsmitte des Zahns.

Die Erfindung schlägt vor, die Härte eines jeden Zahns gezielt lokal an wenigstens einem Ende des Nabenbauteils, also am Bohrungseingang, zu reduzieren, verglichen mit der Härte im weiter innenliegenden Zahnbereich, also z.B. in einem Bereich der Längsmitte des Zahns. Diese Härtereduktion findet zumindest an einer Zahnflanke eines jeden Zahns, bevorzugt der Zahnflanke, die im Betrieb lasttragend ist, wenn es eine Vorzugsdrehrichtung gibt, statt.

Durch die gezielte Einstellung eines solchen Härteprofils wird erreicht, dass gerade in dem für die Erzeugung der eingangs beschriebenen Spannungsspitzen relevanten Bereich des Nabenbauteils ein reduziertes Härteniveau gegeben ist, mithin also das Material respektive die Zähne weicher und damit elastischer sind, und insbesondere weicher sind als die Zähne respektive Zahnflanken der Außenverzahnung der Welle. Kommt es folglich im Betrieb zu einem Drehmomentübertrag, verbunden mit einer Wellentorsion, so kann aufgrund einer gewissen elastischen Verformung der Zähne der Innenverzahnung in deren weicherem Bereich ein Abbau der Spannungsspitzen an der Nabenbauteilkante erreicht werden, was die Gefahr von spannungsspitzenbedingten Schäden reduziert. Insbesondere ist eine Beschädigung der Welle vermieden, da die Härte der Innenverzahnung des Nabenbauteils am Eingangsbereich vorzugsweise niedriger ist als die Härte der Wellenverzahnung. Zwar sind üblicherweise sowohl die Innen- als auch die Außenverzahnungen gehärtet, wobei zumeist die Innenverzahnung eine höhere Härte als die Außenverzahnung aufweist. Durch die gezielte lokale Härtereduzierung an der Innenverzahnung jedoch weist diese im kritischen Bereich vorzugsweise ein niedrigeres oder vergleichbares Niveau als die Härte an der Außenverzahnung auf, so dass es zu einer lokalen elastischen Verformung im Nabenkantenbereich kommt, die eine Beschädigung an der Wellenaußenverzahnung verhindert.

Handelt es sich bei der Welle-Nabe-Verbindung beispielsweise um eine Extruderschnecke, so sind sämtliche Nabenbauteile respektive Schneckenelemente in entsprechender Weise mit dem an einem Bauteileingang und/oder Bauteilausgang lokal vorgesehenen, reduzierten Härteniveau an wenigstens einer Zahnflanke versehen. Über die Länge der Extruderschnecke kommt es aus diesem Grund weder an einem Nabenbauteil noch der Welle zu einer Ausbildung hoher Spannungsspitzen, die zu etwaigen Beschädigungen führen.

Die Erzeugung der in ihrer Härte lokal reduzierten Bereiche oder Regionen erfolgt bevorzugt dadurch, dass durch eine Temperaturbehandlung eine gezielte lokale Veränderung des Gefüges des Bauteilmaterials, üblicherweise ein geeigneter Stahl, bewirkt wird. Durch diese Wärmebehandlung respektive dieses gezielte Anlassen wird also ein gezieltes lokales Weichglühen des Materials des Zahns, der ansonsten über seine gesamte Länge und Höhe gehärtet ist, erreicht. Diese Gefügeveränderung geht mit einer Härtereduktion einher, so dass sich folglich durch eine gezielte lokale Wärmebehandlung auch eine gezielte lokale Härtevariation erreichen lässt.

Wie beschrieben, erfolgt zumindest an einem Ende jedes Zahns zumindest an einer Zahnflanke die Ausbildung eines solchen, in seiner Härte reduzierten Bereichs. Ist eine Vorzugsdrehrichtung gegeben, wie dies beispielsweise im Falle einer Extruderschnecke der Fall ist, so wird nur über eine Zahnflanke des jeweiligen Zahns das Drehmoment übertragen, so dass es ausreichend ist, diese lokale Härtereduktion nur im Bereich der im Betrieb lasttragenden Zahnflanke vorzusehen. Ist die Innenverzahnung beidseits, also an beiden Zahnflanken belastet, so kann natürlich an jeder Zahnflanke die entsprechende Härtereduktion vorgesehen werden, wobei sich, worauf nachfolgend noch eingegangen wird, je nach Größe des Zahns über den Zahnquerschnitt unterschiedliche Härteprofile ergeben können.

Wie eingangs beschrieben kommt es vor allem bei hohen auszuleitenden Drehmomenten zu einer Wellentorsion, die zu einer übermäßigen Belastung der Zahnflanken am Eingang des Nabenbauteils führt. Eine ähnlich hohe Belastung, jedoch auf der anderen Seite des Zahns, findet am Ausgang des Nabenbauteils statt, ebenfalls resultierend aus der durch die Geometrie der Verzahlung gehinderten Wellentorsion. Um auch dort die Ausbildung etwaiger Spannungsspitzen zu vermeiden sieht eine besonders zweckmäßige Weiterbildung der Erfindung vor, dass die Härte jedes Zahns auch am anderen Ende zumindest an einer Zahnflanke niedriger ist als im Bereich der Längsmitte des Zahns. Gemäß dieser Erfindungsausgestaltung werden folglich an beiden Seiten des Nabenbauteils zahnseitig lokale, in ihrer Härte reduzierte Bereiche geschaffen, so dass an beiden kritischen Nabenenden respektive im Bereich der dortigen Nabenkanten eine Reduzierung etwaiger Spannungsspitzen erreicht wird.

Ist eine Vorzugsdrehrichtung gegeben, ist also eine definierte lasttragende Zahnflanke vorgesehen, so erfolgt bei Ausbildung in der Härte erniedrigter Bereiche auch am gegenüberliegenden, zweiten Ende die Härtereduktion an der der lasttragenden Zahnflanke des jeweiligen Zahns gegenüberliegende Zahnflanke, gegen die die tordierende Welle zwangsläufig läuft. Wie beschrieben, wird die Härte nur lokal reduziert, verglichen mit der Grund- oder Basishärte des Zahns, der von Haus aus gehärtet ist. Die Härte nimmt also in axialer und radialer Richtung zu. Eingangsseitig ist folglich die Härte am niedrigsten, in axialer Richtung nimmt sie zu, je nachdem wie tief, in Axialrichtung gesehen, die Wärmebehandlung erfolgte respektive wie weit die Wärmefront in den Zahn eingedrungen ist, bis die Grundhärte erreicht ist. Ähnliches gilt in radialer Richtung. Auch hier nimmt die Härte in Abhängigkeit der Wärmeeindringtiefe radial weiter außenliegend wieder zu, die Härtezunahme kann auch erst im Nabenmaterial erfolgen, das heißt, dass der Zahn über seine gesamte Höhe lokal weicher eingestellt ist.

Darüber hinaus kann, wie bereits einleitend erwähnt, je nach Art der Innenverzahnung über den Zahnquerschnitt ein unterschiedliches Härteprofil gegeben sein. Ist nur eine Zahnflanke weich eingestellt, so kann sich beispielsweise bei großen respektive breiten Zähnen die Härte in Umfangsrichtung zur gegenüberliegenden, nicht weich eingestellten Zahnflanke wieder erhöhen, das heißt, dass pro Zahn nur eine weiche Zahnflanke gegeben ist, während die andere nach wie vor die Grundhärte aufweist. An einem Ende betrifft dies folglich die lasttragende, am anderen Ende die lastfreie Zahnflanke. Daneben können beide Zahnflanken eines Zahns weich eingestellt sein, das heißt, dass die Härte an beiden einander gegenüberliegenden Zahnflanken jedes Zahns niedriger ist als im Bereich der Längsmitte des Zahns. Diese Ausgestaltung wird gewählt, wenn keine Vorzugsdrehrichtung gegeben ist, mithin also eine Beanspruchung beider Zahnflanken im Betrieb erfolgt. Dabei kann die Härte in Umfangsrichtung von beiden Zahnflanken zur Zahnmitte hin zunehmen, was insbesondere bei relativ breiten oder dicken Zähnen der Fall sein kann, da es in diesem Fall nicht erforderlich ist, den Zahn quasi über seine gesamte Breite hin weich einzustellen. Alternativ ist es natürlich, insbesondere bei schmäleren Verzahnungen, möglich, dass der Zahn über seine Breite zumindest im Bereich des Zahnkopfes, bevorzugt über seine gesamte Höhe, eine im Wesentlichen konstante reduzierte Härte aufweist. Er ist also durchgehend über seine Breite weich eingestellt.

Für den Abbau der Spannungsspitzen ist es bereits ausreichend, wenn die Härte in einem relativ kurzen Bereich, axial gesehen, erniedrigt ist. So ist es, insbesondere bei kleineren Verzahnungen, ausreichend, wenn die Härte in einem Bereich von wenigstens 0,5 mm, insbesondere von wenigstens 1 mm in axialer Richtung niedriger ist als im daran anschließenden, zur Zahnmitte hin laufenden Bereich. Es ist also ein nur sehr kurzer Bereich weich eingestellt, anschließend steigt die Härte wieder auf die Maximal- oder Grundhärte, die dann nahezu über die gesamte Länge gleich ist, bis gegebenenfalls zum anderen, möglicherweise ebenfalls weich eingestellten Verzahnungsende. Die Härte sollte jedoch in einem Bereich bis maximal 10 mm, vorzugsweise bis maximal 7 mm, bevorzugt bis maximal 5 mm niedriger sein als im daran anschließenden Bereich. Eine weitergehende Erstreckung des weichen Bereichs in axialer Richtung ist zum Spannungsspitzenabbau nicht erforderlich, da wie beschrieben der Großteil des abzuleitenden Drehmoments innerhalb von wenigen Millimetern in das Nabenbauteil eingeleitet wird.

In radialer Richtung sollte sich der Bereich der reduzierten Härte wenigstens über die halbe, vorzugsweise über die gesamte Höhe erstrecken. Mitunter kann sich der weich eingestellte Bereich auch noch etwas weiter in das Nabenmaterial in radialer Richtung erstrecken, so dass sich auch in radialer Richtung ein vergrößerter elastischer Bereich ergibt. Das heißt, dass sich der Bereich der erniedrigten Härte bis in den Bereich des Zahnfußes oder darüber hinaus erstreckt, insbesondere also im Bereich des Übergangs zur Nut, also den Kanten- oder Kerbbereich, so dass die Kerbspannungen im Übergangsbereich reduziert werden kann. Der Härteanstieg findet dann erst im Nabenmaterial selbst statt.

Die Härte jedes Zahns an dem oder den Enden sollte um wenigstens 5 %, vorzugsweise um wenigstens 10 % niedriger sein als im Bereich der Längsmitte. Je nachdem, wie weit die Eindringtiefe der Wärme- oder Temperaturfront ist, ergibt sich ein in radialer und axialer und gegebenenfalls umfänglicher Richtung mehr oder weniger großer Bereich niedrigerer Härte. Der Härteverlauf ist hierbei jedoch stetig, das heißt, dass die Härte von einem Bereich mit minimaler Härte, in dem sie gegebenenfalls zunächst über eine gewisse Länge im wesentlichen konstant ist, stetig zur Grundhärte hin ansteigt. Der Umstand, dass die Härte jedes Zahns um wenigstens 5 %, vorzugsweise um wenigstens 10 % niedriger ist als im Bereich der Längsmitte, bezieht sich auf den Bereich, in dem die Härte am niedrigsten eingestellt ist. Dieser Bereich ist randseitig gegeben, seine axiale und radiale und gegebenenfalls umfängliche Erstreckung hängt wie beschrieben davon ab, wie weit die Temperaturfront bei der Temperaturbehandlung in der jeweiligen Richtung in das Material eindringt.

Die Härte sollte im Bereich der Längsmitte zwischen 55 - 65 HRC und im Bereich des oder der Enden zwischen 45 - 52 HRC betragen.

Das Nabenbauteil selbst kann eine beliebige Innenverzahnung aufweisen, das heißt, dass die Zähne ein symmetrisches Querschnittsprofil oder ein asymmetrisches Querschnittsprofil aufweisen können. Es kann sich also beispielsweise um eine symmetrische Evolventenverzahnung oder eine Verzahnung mit ebenen Zahnflanken handeln, oder um eine asymmetrische spezielle Verzahnung, wie sie beispielsweise in EP 1 632 331 A1 beschrieben ist.

Bevorzugt handelt es sich bei dem Nabenbauteil um ein auf eine, eine Außenverzahnung aufweisende Extruderwelle aufschiebbares Extruderschneckenelement.

Neben dem Nabenbauteil betrifft die Erfindung ferner eine Welle-Nabe-Anordnung, umfassend eine Welle mit einer axial verlaufenden Außenverzahnung sowie wenigstens ein auf die Welle aufschiebbares oder aufgeschobenes Nabenbauteil der vorstehend beschriebenen Art. Bevorzugt handelt es sich bei der Welle-Nabe-Anordnung um eine Extruderschnecke, auf deren Extruderwelle eine Mehrzahl an Nabenbauteilen, in diesem Fall Schneckenelemente, nacheinander aufgeschoben oder aufschiebbar sind.

In Weiterbildung der Erfindung kann vorgesehen sein, dass die Härte der Zähne der Außenverzahnung kleiner als die Härte der Zähne der Innenverzahnung im Bereich der Längsmitte ist, und größer als die Härte im weicheren Bereich der Zähne der Innenverzahnung an dem oder den Enden. Wie beschrieben sind die Zähne der Außen- und der Innenverzahnung üblicherweise gehärtet. Da jedoch zumeist die Welle und das Nabenbauteil aus unterschiedlichen Stählen bestehen, sind die Zähne der Außenverzahnung mitunter härter als die Zähne der Innenverzahnung. Um die Spannungsspitzen im Betrieb abbauen zu können ist nun vorgesehen, dass die durch das Weichglühen in den in der Härte reduzierten, weicheren Bereiche der Zähne der Innenverzahnung eine geringere Härte als die Zähne der Außenverzahnung aufweisen, so dass es zu einer elastischen Verformung in den weicheren Bereichen für den Spannungsabbau kommt.

Dabei sollte die Härte der Zähne der Innenverzahnung im weicheren Bereich an dem oder den Enden um wenigstens 3 %, vorzugsweise um wenigstens 5 %, insbesondere um wenigstens 10 % niedriger als die Härte der Zähne der Außenverzahnung der Welle sein. Durch das Weichglühen wird also eine relativ deutliche Härtereduzierung erreicht, so dass sich ein entsprechender Unterschied zwischen der Härte im weicheren Bereich und der Außenverzahnungshärte ergibt.

Neben dem Nabenbauteil betrifft die Erfindung des Weiteren ein Verfahren zur Herstellung eines solchen Nabenbauteils, wobei das Nabenbauteil eine in einer Bohrung ausgebildete, sich axial von einem Ende der Bohrung zum anderen Ende erstreckende Innenverzahnung mit mehreren Zähnen und dazwischen vorgesehenen Nuten aufweist. Das Verfahren zeichnet sich dadurch aus, dass die gehärteten Zähne an wenigstens einem Ende zumindest an einer Zahnflanke derart erwärmt werden, dass sich im erwärmten Bereich eine Härte einstellt, die niedriger ist als im Bereich der Längsmitte des Zahns. Es wird also nach Fertigstellung des Nabenbauteils, wenn also dessen Innenverzahnung ausgebildet und gehärtet ist, die Temperaturbehandlung, also das Anlassen respektive Weichglühen durchgeführt. Hierzu werden an wenigstens einem Ende die Zähne zumindest an einer Zahnflanke lokal erwärmt, so dass sich im erwärmten Bereich das Gefüge verändert und weicher wird. Nach dem Abkühlen zeigt dieser zuvor erwärmte Bereich folglich eine deutlich niedrigere Härte als im thermisch nicht behandelten Bereich des Zahns. Dabei wird die Anlasstemperatur sowie die Anlasszeit je nach Material gewählt. Wird eine relativ kurze Anlasszeit gewählt, so sollte die Anlasstemperatur etwas höher gewählt werden, um innerhalb der kurzen Anlasszeit sicherzustellen, dass ein hinreichend hoher Temperatureintrag respektive eine gute Er- bzw. Durchwärmung einsetzt. Eine typische Anlasstemperatur ist ≥ 500 °C, vorzugsweise ≥ 600 °C, wobei die Anlasszeit je nach gewählter Temperatur und der gewünschten Eindringtiefe der Temperaturfront im Bereich weniger Sekunden bis Minuten liegen kann.

Die Erwärmung erfolgt zumindest an der im Betrieb lasttragenden Zahnflanke, wenn eine Vorzugsdrehrichtung gegeben ist. Ist eine beidseits belastete Innenverzahnung vorgesehen, so kann die Erwärmung auch an der der lasttragenden Zahnflanke gegenüberliegenden Zahnflanke und gegebenenfalls auch am flachen Zahnkopfende, also über die gesamte Zahnfläche erfolgen. Der ganze Zahn wird also an allen freien Flächen erwärmt. Darüber hinaus kann, um nicht nur an einem Ende des Nabenbauteils einen Spannungsspitzenabbau zu realisieren, auch vorgesehen sein, dass die Zähne am anderen Ende zumindest an einer Zahnflanke, gegebenenfalls auch an beiden Zahnflanken und gegebenenfalls dem flachen Zahnkopf, derart erwärmt werden, dass sich im erwärmten Bereich eine Härte einstellt, die niedriger ist als im Bereich der Längsmitte des Zahns.

Dabei kann die Erwärmung derart erfolgen, dass die Härte in axialer und radialer Richtung zunimmt und/oder dass die Härte in Umfangsrichtung zur gegenüberliegenden Zahnflanke zunimmt. Je nachdem, wie weit die Temperaturfront axial und radial gesehen in das Material eindringt, wie groß also der erwärmte Bereich ist, und wie lange die Erwärmungsdauer ist, bildet sich ein sich mehr oder weniger weit in axialer und radialer Richtung erstreckender, weichgeglühter Bereich aus.

Dabei kann die Erwärmung des Weiteren derart erfolgen, dass die Härte an beiden einander gegenüberliegenden Zahnflanken jedes Zahns niedriger ist als im Bereich der Längsmitte des Zahns und dass entweder die Härte von beiden Seiten zur Zahnmitte hin zunimmt, was bei sehr breiten Zähnen, die während der Anlassbehandlung nicht durchwärmen, der Fall ist, oder dass der Zahn über seine Breite zumindest im Bereich des Zahnkopfes eine im Wesentlichen konstante Härte aufweist, was bei schmäleren Zähnen der Fall sein kann, die relativ schnell durchwärmen.

Dabei kann des Weiteren die Erwärmung derart erfolgen, dass die Härte in einem Bereich von wenigstens 0,5 mm, insbesondere von wenigstens 1 mm in axialer Richtung niedriger ist, und/oder dass die Härte in einem Bereich bis maximal 10 mm, vorzugsweise bis maximal 7 mm, bevorzugt bis maximal 5 mm niedriger ist, und/oder dass die Härte in radialer Richtung wenigstens über die halbe, vorzugsweise die ganze Zahnhöhe niedriger ist. In jedem Fall ergibt sich in axialer wie in radialer Richtung ein Härteprofil, das zunächst ein niedriges Niveau aufweist, das sodann stetig auf die maximale Härte ansteigt.

Weiterhin kann die Erwärmung derart erfolgen, dass sich der Bereich der erniedrigten Härte bis in den Bereich des Zahnfußes oder darüber hinaus erstreckt, das heißt, dass auch insbesondere der Bereich des Übergangs des Zahns zur Nut, also der Kanten- oder Kerbbereich eine reduzierte Härte aufweist.

Schließlich kann die Erwärmung auch derart erfolgen, dass die Härte jedes Zahns an dem oder den Enden um wenigstens 5 %, vorzugsweise um wenigstens 10 % niedriger ist als im Bereich der Längsmitte, wobei die Härte im Bereich der Längsmitte vorzugsweise zwischen 55 - 65 HRC und im Bereich des oder Enden vorzugsweise zwischen 45 - 52 HRC beträgt.

Zur Steuerung des Anlassens sieht eine zweckmäßige Weiterbildung der Erfindung vor, dass die Erwärmung in Abhängigkeit der mittels einer Messeinrichtung gemessenen Oberflächentemperatur an dem wärmebehandelten Zahn, insbesondere an der Zahnflanke im Bereich des freien Endes oder der Stirnseite des Zahns gesteuert wird. Es erfolgt also während des Anlassens eine Temperaturerfassung, wozu beispielsweise ein Pyrometer verwendet wird, mit dem die Oberflächentemperatur im wärmebehandelten Bereich gemessen wird. Anhand eines geeigneten Rechenalgorithmus oder eines Modells kann aus der gemessenen Oberflächentemperatur, der Zahngeometrie sowie der verwendeten Heizeinrichtung errechnet werden, wie sich die Temperaturverteilung im Material über die Zeit gestaltet, woraus die entsprechenden Steuerparameter für die Heizeinrichtung wie die Dauer, die Intensität etc. je nach verwendetem Heizelement ermittelt werden können. Da das verwendete Metall, also der Stahl bekannt ist, wie auch dessen vorangegangene Behandlung, sei sie mechanisch, sei sie thermisch, kann anhand eines entsprechenden Modells eine relativ genaue Ermittlung der Temperaturverteilung und daraus entsprechende Ableitung der Steuerparameter und der Gefügeart bzw. der Gefügeumwandlung erfolgen.

Gemäß einer ersten zweckmäßigen Erfindungsalternative kann zum Erwärmen wenigstens eine Induktionsspule, die endseitig in das Nabenbauteil eingeführt oder endseitig positioniert wird, verwendet werden. Über diese Induktionsspule wird, wenn über sie Strom fließt, ein Magnetfeld erzeugt, das zur Induktion von Wirbelströmen im Nabenbauteil, also im Bereich der benachbarten Zähne führen. Über diese induzierten Wirbelströme erfolgt die Erwärmung. Die Steuerung des Erwärmungsvorgangs und damit das Eindringen und Fortschreiten der Temperaturfront erfolgt über die Stromstärke des über die Spule fließenden Stromes sowie die Dauer der Bestromung. Die Spule kann beispielsweise in die Bohrung eingeschoben sein, so dass sie axial die Zähne ein Stück weit übergreift, wenn der weichgeglühte Bereich eine entsprechende axiale Länge aufweisen soll. Mitunter reicht es aber auch aus, wenn nicht allzu tief in axialer Richtung erwärmt werden soll, die Spule unmittelbar stirnseitig anzusetzen, da auch in diesem Fall eine wenngleich geringere axiale Erwärmung einsetzt.

Bevorzugt ist es, wenn die Induktionsspule und das Nabenbauteil während der Erwärmung relativ zueinander rotieren. Dies kann beispielsweise durch eine aktive, beispielsweise auch revolvierende Drehung der Induktionsspule relativ zum feststehenden Nabenbauteil erfolgen, alternativ kann auch das Nabenbauteil gedreht werden, während die Induktionsspule steht, oder beide drehen sich relativ zueinander. Infolge der Drehung kommt es zu einer laufenden Variation des erzeugten Magnetfeldes, was für eine Vergleichmäßigung der Wirbelstrominduktion und damit für eine Vergleichmäßigung des Erwärmungsvorgangs sorgt.

Wird das Nabenbauteil an beiden Enden weichgeglüht, so ist es denkbar, simultan an beiden Enden in eine entsprechende Induktionsspule zu positionieren, so dass die Wärmebehandlung an beiden Seiten gleichzeitig erfolgt.

Alternativ zur Verwendung einer solchen Induktionsspule ist es denkbar, zum Erwärmen wenigstens einen Laser zu verwenden. Dieser strahlt direkt auf den zu erwärmenden Bereich, also beispielsweise die Zahnflanke. Über die Bestrahlungsdauer sowie die Intensität des emittierten Laserlichts kann auch hier die Erwärmung respektive das Eindringen oder Fortschreiten der Temperaturfront gesteuert werden. Eine Bewegung des Nabenbauteils ist hier nicht erforderlich, da sich der Laser letztlich beliebig steuern lässt. Auch hier kann, wie im Falle der Induktionsspule, durch eine entsprechende Messung der Ist-Temperatur eine aktive Steuerung respektive Regelung des Anlassvorgangs erreicht werden.

Schließlich kann gemäß einer dritten Alternative zum Erwärmen ein beheiztes Heizelement, das endseitig in das Nabenbauteil eingeführt oder positioniert wird, verwendet werden. Dieses Heizelement, das beispielsweise eine Außenverzahnung aufweist, die ähnlich der Innenverzahnung ist, so dass es quasi in die Innenverzahnung einschiebbar ist, wird beispielsweise als Widerstandsheizelement betrieben. Es kann entweder in Kontakt mit dem Nabenbauteil gebracht werden oder über einen schmalen Spalt von diesem beabstandet sein. In beiden Fällen ist ein hinreichender Wärmeeintrag in das Nabenbauteil respektive die Verzahnung möglich. Wiederum erfolgt auch hier bevorzugt die Steuerung über eine in-situ-Temperaturerfassung. Ebenso kann auch hier, ähnlich wie bei der Erwärmung durch Induktion oder über den Laser, auch an beiden Seiten simultan die Erwärmung vorgenommen werden.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipdarstellung eines Extruders,
- Fig. 2: eine Prinzipdarstellung einer Extruderschneckenwelle als Beispiel einer Welle-Nabe-Anordnung,
- Fig. 3: eine Schnittansicht durch zwei in ihrer Einbauposition zueinander dargestellte Extruderschnecken, die im Betrieb gleichsinnig drehen und miteinander kämmen,
- Fig. 4: eine vergrößerte Teilansicht der Innenverzahnung eines erfindungsgemäßen Nabenbauteils in Form eines Extruderschneckenelements in einer Stirnansicht mit dargestelltem weichgeglühten Bereich,
- Fig. 5: eine Teilansicht, geschnitten entlang der Linie V-V aus Fig. 4, durch einen Zahn der Innenverzahnung,
- Fig. 6: ein Diagramm zur Darstellung des radialen Härteverlaufs durch einen Zahn der Innenverzahnung,
- Fig. 7: ein Diagramm zur Darstellung des Härteverlaufs in Umfangsrichtung durch einen Zahn der Innenverzahnung
- Fig. 8: ein Diagramm zur Darstellung des axialen Härteverlaufs längs eines Zahnes der Innenverzahnung,
- Fig. 9: eine Teilansicht der Innenverzahnung mit einem weichgeglühten Bereich einer zweiten Ausführungsform,
- Fig. 10: eine Teilansicht einer weiteren, eine andere Geometrie aufweisende Innenverzahnung mit einem weichgeglühten Bereich einer dritten Ausführungsform, und
- Fig. 11: eine Prinzipdarstellung zur Erläuterung der verfahrensgemäßen Erzeugung der weichgeglühten Bereiche.

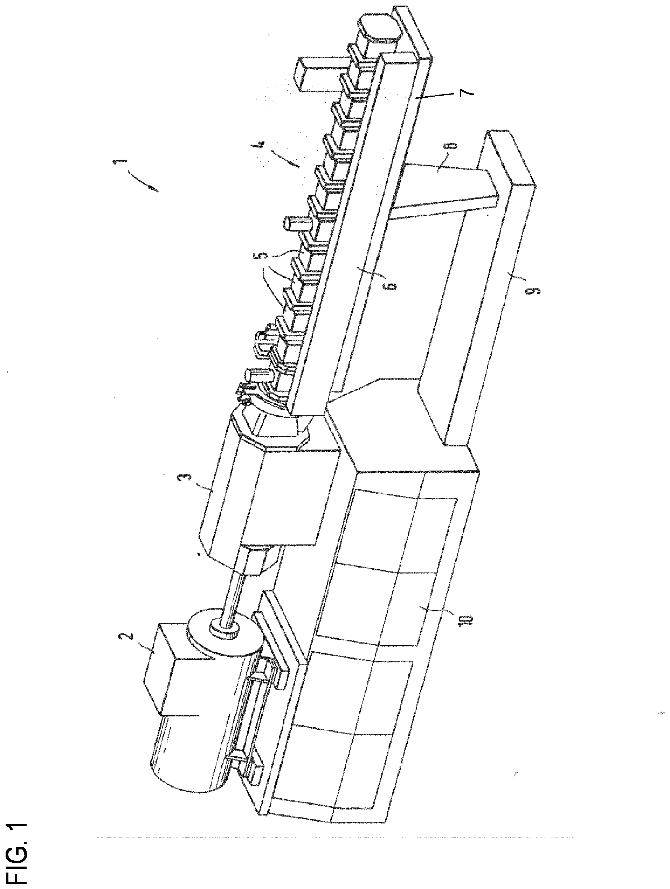

Fig. 1 zeigt einen Extruder 1 mit einem Motor 2 mit nachgeschaltetem Getriebe 3 und einem Extrusionszylinder 4 bestehend aus mehreren Zylinderabschnitten 5, in dessen Innerem im gezeigten Beispiel zwei Extruderschnecken als Beispiele für eine erfindungsgemäße Welle-Nabe-Anordnungen unter Verwendung eines erfindungsgemäßen Nabenbauteils in entsprechenden Bohrungen aufgenommen sind, die über das Getriebe 3, mit dem sie über eine nicht näher gezeigte, jedoch hinlänglich bekannte Kopplung gekoppelt sind, angetrieben werden. Es handelt sich beispielsweise um einen gleichsinnig drehenden Extruder. Der Extrusionszylinder ist zusammen mit sämtlichen benötigten Kühlmittel-, Strom- und Steuerleitungen, die in einem entsprechenden Einbaukasten 6 verlegt sind, auf einem Träger 7, der wiederum auf einer Wange 8 des Maschinenrahmens 9 abgestützt ist, aufgebaut. In einem Versorgungs- und Steuerschrank 10 befinden sich die Kühlmittel- und Versorgungseinrichtungen sowie Steuereinrichtungen, über die die Versorgung der einzelnen Komponenten erfolgt. Der Aufbau eines solchen Extruders ist hinlänglich bekannt.

Wie beschrieben sind im Inneren des Extrusionszylinders 4 bestehend aus den mehreren miteinander lösbar verbundenen Zylinderabschnitten 5 zwei Extruderschnecken aufgenommen. Bei diesen handelt es sich um sogenannte Steckschnecken, die speziell im Hinblick auf das zu bearbeitende Material bzw. herzustellende Produkt aufgebaut bzw. konfiguriert werden können. Sie sind dem Extrusionszylinder 4 bei Bedarf entnehmbar.

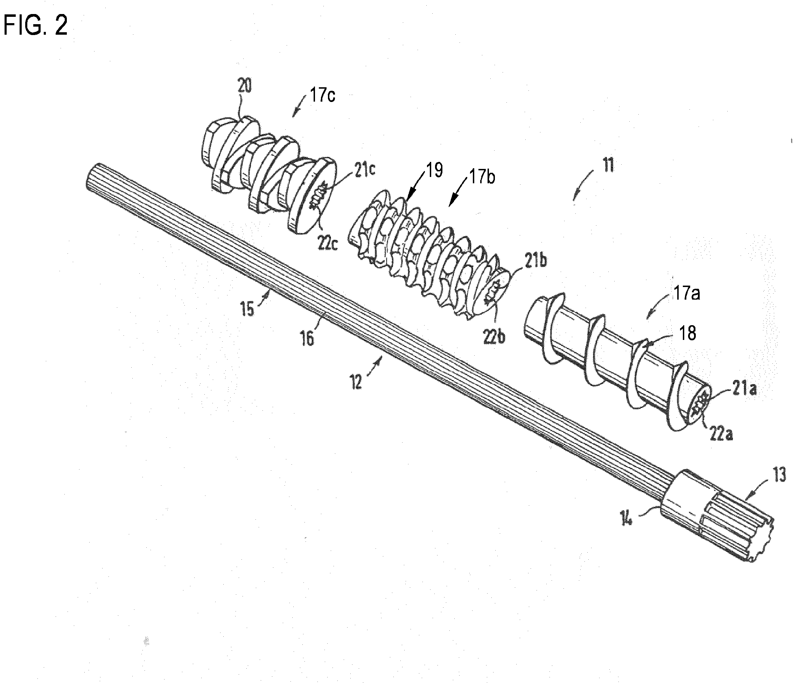

Fig. 2 zeigt in Form einer Prinzipdarstellung als Beispiel einer erfindungsgemäßen Welle-Nabe-Anordnung eine Extruderschnecke 11, bestehend aus einer Welle 12, die an ihrem hinteren, breiteren Ende zum einen eine erste Innenverzahnung 13 aufweist, über die sie mit dem Getriebe 3 antriebsmäßig koppelbar ist. An einen Anschlagbund 14 schließt sich ein Wellenabschnitt 15 mit einer Außenverzahnung 16 an. Auf diesem Wellenabschnitt 15 sind abhängig vom zu verarbeitenden Material bzw. herzustellenden Produkt verschiedene separate Schneckenelemente aufsteck- oder auffädelbar und am Anschlagbund 14 gegenlagerbar.

Fig. 2 zeigt exemplarisch drei Schneckenelemente 17a, 17b und 17c. Bei dem Schneckenelement 17a kann es sich beispielsweise um Förderelement handeln, das eine Schnecke 18 aufweist, wobei im Schneckengang das Material gefördert wird. Bei dem Schneckenelement 17b kann es sich beispielsweise um ein Mischelement handeln, das ebenfalls eine Schnecke 19 aufweist, die jedoch Durchbrechungen aufweist. Schließlich kann es sich bei dem Schneckenelement 17c um ein Knetelement handeln, das entsprechende Knetabschnitte 20 besitzt. Über ein solches Knetelement werden die zu verarbeitenden Materialien unter hohem Energieeintrag bearbeitet und beispielsweise plastifiziert oder aufgeschmolzen, je nach Anwendung. Die Schneckenelemente sind nur exemplarisch dargestellt, sie können auch deutlich kürzer sein als gezeigt.

Zum Aufstecken auf den Wellenabschnitt 15 respektive dessen Außenverzahnung 16 weist jedes Schneckenelement 17a, 17b, 17c eine zentrale Bohrung 21a, 21b, 21c auf, an deren Innenseite, also der Nabe, jeweils eine Innenverzahnung 22a, 22b, 22c vorgesehen ist, mit welcher sie auf die Außenverzahnung 16 des Wellenabschnitts 15 aufgesteckt wird, so dass die Innenverzahnung 22a, 22b, 22c und die Außenverzahnung 16 miteinander kämmen. Es handelt sich dabei um eine formschlüssige Welle-Nabe-Verbindung, die nachfolgend im Detail beschrieben wird, wobei die Schneckenelemente 17a, 17b, 17c ein erfindungsgemäßes Nabenbauteil darstellen.

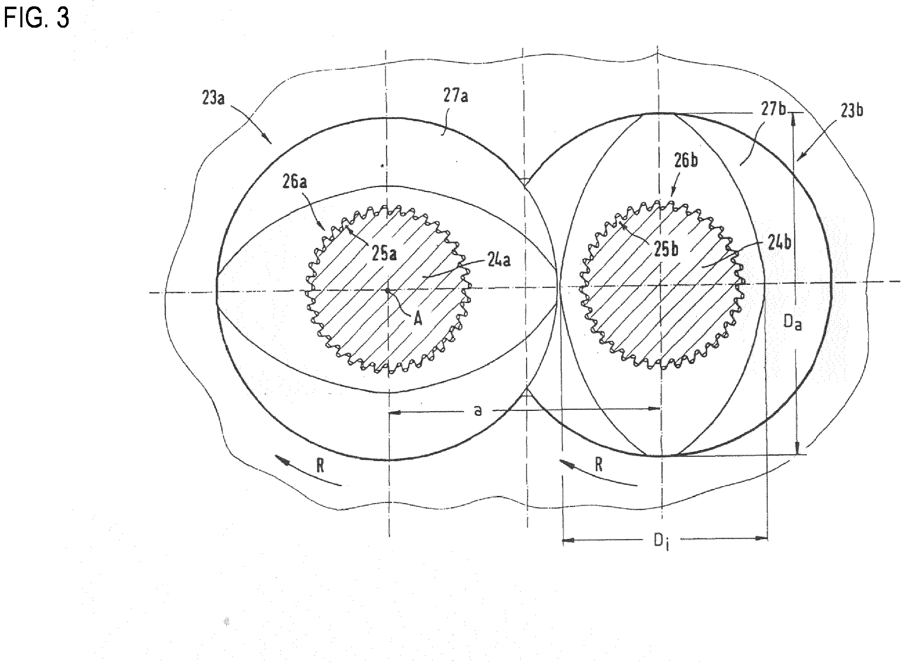

Fig. 3 zeigt zwei erfindungsgemäße Extruderschnecken 23a, 23b, die parallel nebeneinander angeordnet sind, so wie sie auch im Extrusionszylinder 4 bezüglich einander positioniert sind. Ist der Extruder aus Fig. 1 ein Einschneckenextruder, so ist natürlich nur eine Extruderschnecke vorgesehen. Die Extruderwellen 24a, 24b sind um den Achsabstand a voneinander beabstandet. Dargestellt ist ferner der Schneckenaußendurchmesser Dₐ sowie der Schneckeninnendurchmesser Dᵢ am Schneckengrund. Aus dem Verhältnis Dₐ/Dᵢ ergibt sich die Volumigkeit der Schnecke bzw. des Extruders, wobei die Volumigkeit eine Kenngröße des Extruders ist.

Gezeigt ist ferner die Außenverzahnung 25a, 25b der jeweiligen Extruderwellen 24a, 24b sowie die Innenverzahnungen 26a, 26b an der Nabe der jeweiligen Schneckenelemente 27a, 27b. Aus Fig. 3 ist ersichtlich, dass es sich jeweils um asymmetrische Verzahnungsprofile handelt, die speziell bezogen auf eine bestimmte Vorzugsdrehrichtung der Extruderschnecken 23a, 23b, die mit den beiden mit R gekennzeichneten Pfeilen dargestellt ist, ausgelegt sind. Bezüglich weiterer Einzelheiten einer solchen spezifischen asymmetrischen Verzahnungsgeometrie, wie sie hier exemplarisch gezeigt ist, wird auf EP 1 632 331 A1 verwiesen, die diese spezielle Verzahnungsgeometrie zum Inhalt hat.

Grundsätzlich zeichnet sich diese Verzahnungsgeometrie dadurch aus, dass sie eine einen kleinen Winkel zur Normalen auf die Drehachse aufweisende erste Zahnflanke, die die lasttragende Zahnflanke darstellt, aufweist, während die gegenüberliegende Zahnflanke einen deutlich größeren Winkel zur Normalen einnimmt.

Anstelle eines solchen asymmetrischen Zahnprofils ist es selbstverständlich bei einer erfindungsgemäßen allgemeinen Welle-Nabe-Anordnung auch denkbar, jedes beliebige andere Zahnprofil, beispielsweise ein symmetrisches Profil wie ein Evolventenprofil, vorzusehen. Das dargestellte asymmetrische Zahnprofil ist lediglich exemplarisch gewählt.

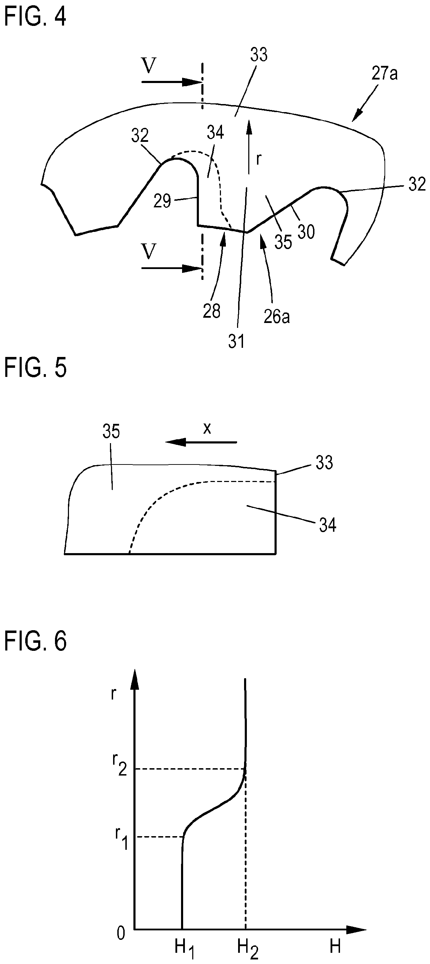

Fig. 4 zeigt eine vergrößerte Teilansicht des Extruderschneckenelements 27a mit seiner Innenverzahnung 26a, wobei aus dieser Darstellung die Asymmetrie des Zahnprofils deutlich erkennbar ist. Jeder Zahn 28 weist eine bezogen auf die Vorzugsdrehrichtung R nachlaufende drehmoment- oder lastübertragende Zahnflanke 29 auf, die hier exemplarisch unter einem Winkel von 0° zur Normalen auf die Drehachse der Schneckenwelle steht. Die gegenüberliegende, in der Vorzugsdrehrichtung R vorlaufende Zahnflanke 30 weist demgegenüber einen deutlich größeren Winkel zur Normalen auf die Drehachse auf. Es bildet sich ein sehr breiter Zahnfuß 31 aufgrund der Asymmetrie des Zahnprofils aus. Die jeweiligen Zahnflanken 29, 30 sind ebenflächig und laufen in jeweils eine ausgerundete Nut 32 ein, über die zwei benachbarte Zähne voneinander beabstandet sind.

Das entsprechende Zahnprofil der Außenverzahnung 25a der Extruderwelle 24a ist komplementär ausgeführt, so dass die Außenverzahnung in die Innenverzahnung greifen kann, wobei zwischen den einzelnen, einander benachbarten Flanken der Verzahnungen ein minimales Flankenspiel im Bereich weniger Hundertstel Millimeter gegeben ist.

Wie bereits Fig. 3 zeigt greifen die lastübertragenden Zahnflanken der Außenverzahnungen 25a, 25b an den lasttragenden Zahnflanken 29 der Innenverzahnungen 26a, 26b an. Beide Verzahnungen können gehärtet sein, wobei die Härte der Innenverzahnungen 26a, 26b, also der Zähne 28 größer ist als die der Außenverzahnungen 25a, 25b, also der dortigen Zähne.

Um im Betrieb bei Übertragung hoher Drehmomente, was mit einer geringen Torsion der jeweiligen Extruderwellen 24a, 24b verbunden ist, auftretende Spannungsspitzen zu reduzieren bzw. abzubauen ist erfindungsgemäße jedes Extruderschneckenelement 27a, 27b im Bereich seiner beiden Enden respektive Stirnseiten in spezieller Weise wärmebehandelt, so dass sich an den jeweiligen Zähnen 28 lokale Bereiche reduzierter Härte ausbilden, also Bereiche, in denen eine niedrigere Härte gegeben ist als im daran anschließenden Zahnbereich respektive im Bereich der Zahnmitte, also in thermisch nicht behandelten Zahnabschnitten.

Fig. 4 zeigt eine Teilansicht der Stirnfläche 33 des Schneckenelements 27a, wobei über die gestrichelte Linie der eine niedrigere Härte aufweisende, durch Anlassen weichgeglühte Bereich 34 dargestellt ist. Dieser Bereich 34 hat, resultierend aus dem Umstand, dass er durch eine Temperaturbehandlung erzeugt wird, natürlich keine scharfen Grenzen, das heißt, dass der Härteverlauf, worauf nachfolgend noch eingegangen wird, nicht sprunghaft ist, sondern stetig. Die dargestellte gestrichelte Linie dient lediglich zu Veranschaulichungszwecken.

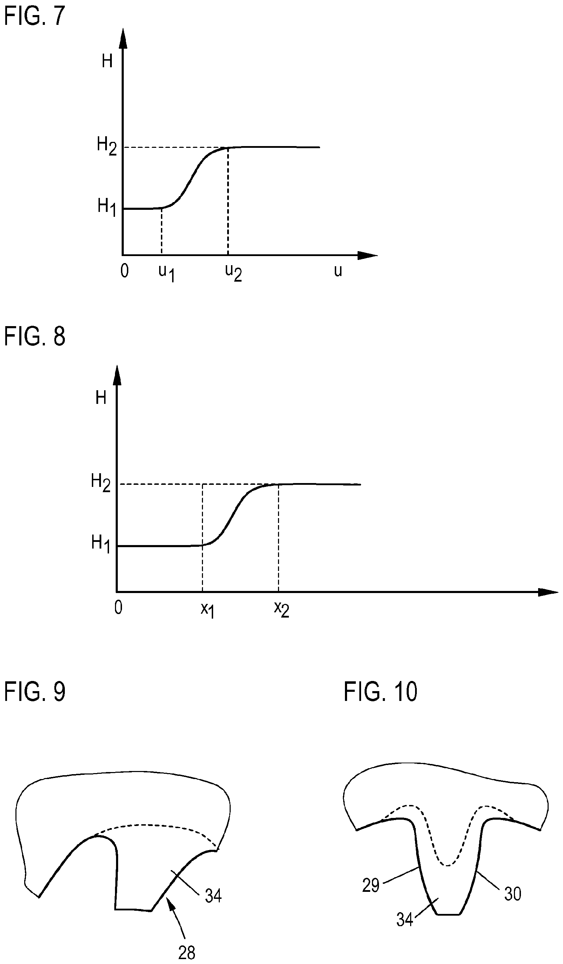

Wie Fig. 4 zeigt, erstreckt sich dieser weichgeglühte Bereich sowohl in Umfangsrichtung, wobei bei diesem Beispiel nur im Bereich der lasttragenden Flanke 29 ein solcher Bereich 34 ausgebildet ist, mithin also nur in an dieser lasttragenden Zahnflanke 29 eine lokale Wärmebehandlung erfolgt ist. Dies ist insbesondere bei relativ großen Zähnen möglich. Ansonsten ist es selbstverständlich denkbar, worauf noch nachfolgend in Verbindung mit den Fig. 8 und 9 noch eingegangen wird, den Zahn über seine gesamte Breite weichzuglühen, so dass über die Zahnbreite gesehen keine Härtevariation gegeben ist.

Ersichtlich erstreckt sich der weichgeglühte Bereich 34 auch ein Stück weit in radialer Richtung, die hier mit r angegeben ist. Er erstreckt sich über die gesamte Höhe des Zahns 28 und ein Stück weit darüber hinaus, so dass auch der Übergangsbereich der Zahnflanke 29 in den Bereich der ausgerundeten Nut 32 in seiner Härte weicher eingestellt ist und insbesondere in diesem Bereich auftretende Kerbspannungen abgebaut werden.

Fig. 5 zeigt eine Schnittansicht längs der Linie V-V durch den Zahn 28. Auch hier ist der weichgeglühte Bereich 34 über die gestrichelte Linie dargestellt, wobei natürlich auch hier gilt, dass dieser Bereich auch in axialer Richtung gesehen keine scharfe Grenze aufweist, sondern ein stetiger Härteverlauf gegeben ist, worauf nachfolgend noch eingegangen wird.

Ersichtlich erstreckt sich der Bereich 34 auch ein definiertes Stück in axialer Richtung, die mit x angegeben ist. Er erstreckt sich von der Stirnseite 33 beginnend, also axial in den Zahn 28. Insgesamt ergibt sich also ein zahnseitig, hier im Bereich der lasttragenden Flanke 29 erzeugtes, weichgeglühtes Materialvolumen, das eine deutlich niedrigere Härte aufweist, als in dem ebenfalls gehärteten, jedoch im Rahmen der Temperaturbehandlung nicht angelassenen, anschließenden Bereich des Zahns 28.

Die Fig. 6 - 8 zeigen drei Diagramme, die exemplarisch den Härteverlauf in radialer Richtung, in Umfangsrichtung und in axialer Richtung am Zahn 28 aus Fig. 4 und Fig. 5 darstellen.

Fig. 6 zeigt, aus Gründen einer einfachen Zuordnung, ein Diagramm, bei dem die Härte H längs der Abszisse und die Radialrichtung r längs der Ordinate aufgetragen ist, wobei weder bezüglich der Härte noch bezüglich der Radialposition konkrete Werte angegeben sind, da das Diagramm lediglich veranschaulichender Natur ist.

Radialposition r = 0 entspricht der Position der Kopffläche des Zahns 28. Ersichtlich liegt in dem Abschnitt zwischen den Radialpositionen 0 und r₁ eine geringe, im wesentlichen konstante bzw. leicht schwankende Härte H₁ vor. Dieser Härtewert steigt sodann stetig im Übergangsbereich zwischen den Radialpositionen r₁ und r₂ an, bis der Härtewerte H₂ erreicht ist. Dieser Härtewerte H₂ entspricht dem Basis- oder Grundhärtewert, den der gehärtete Zahn im Bereich 35, also in dem thermisch unbehandelten Bereich respektive der thermisch unbehandelten Zahnmitte aufweist. Daran anschließend bleibt der Härtewert im wesentlichen konstant bzw. mit leichten Schwankungen bei H₂. Dieser stetige Härteverlauf resultiert daraus, dass die Temperatur sich im Material verteilt, mithin also im Bereich der unmittelbaren Erwärmung eine hohe Temperatur ist, die sich in jeder Richtung stetig erniedrigt. Infolge des im Übergangsbereich zwischen r₁ und r₂ variierenden Temperaturgangs stellt sich dort folglich auch eine variierende Gefügeänderung, verglichen mit der im direkten Erwärmungsbereich zwischen 0 und r₁, ein, woraus letztlich der variierende Härteverlauf resultiert.

Relevant ist in jedem Fall der Bereich zwischen 0 und r₁, in dem eine relativ geringe Härte H₁ gegeben ist. Dieser Bereich kann sich beispielsweise über 1,5 mm in Radialrichtung erstrecken, wenn der Zahn relativ klein ist, er kann aber natürlich auch deutlich länger sein. Die Grund- oder Basishärte H₂ wird beispielsweise an einer Radialposition r₂ von 3 mm erreicht, wobei auch dies lediglich ein beispielhafter Wert ist und natürlich auch dieser Wert von der konkreten Zahnhöhe und Ähnliches abhängt.

Fig. 7 zeigt eine vergleichbare Härteverlaufsdarstellung bezogen auf die Umfangsrichtung. Hier ist längs der Abszisse die Umfangsposition u und längs der Ordinate die Härte H, auch hier wiederum beide dimensionslos, angegeben. An der Umfangsposition 0 ist der Härtewert unmittelbar an der Kante der Stirnfläche des Zahns 28 zur Zahnflanke 29 angegeben. Ersichtlich ist dort ein sehr geringer Härtewerte, wiederum H₁, gegeben. Bis zur Umfangsposition u₁ ist im Wesentlichen dieser niedrige Härtewert H₁ gegeben, sodann steigt auch hier der Härtewert stetig bis zur Umfangsposition u₂ an. Dort ist dann wiederum der Basis- oder Grundhärtewerte H₂ des gehärteten Zahns erreicht. Auch die jeweiligen Bereiche in Umfangsrichtung sind natürlich beliebig variabel und hängen letztlich von der Zahngröße und der Dauer und Intensität der Temperaturbehandlung ab, da hierüber die Ausbreitung der Temperaturfront gesteuert wird.

Fig. 8 zeigt schließlich ein Diagramm, das den axialen Härteverlauf zeigt. Längs der Abszisse ist hier die Axialposition x und längs der Ordinate wiederum die Härte H, auch hier wieder beide Angaben dimensionslos, aufgetragen. Während die Härtewerte in Radial- und Umfangsrichtung beispielsweise direkt an der Stirnseite 33 des Zahns 28 gemessen werden, werden die Härtewerte in Axialrichtung direkt entlang der lasttragenden Zahnflanke 29 gemessen, beispielsweise im Bereich der halben Zahnhöhe. Ersichtlich ist auch hier im Bereich zwischen den Axialpositionen x = 0 (entsprechend der Kante der Zahnflanke 29 im Übergang zur Stirnfläche 33) und x₁ eine relativ niedrige Härte H₁ gegeben. Dieser Abschnitt ist beispielsweise etwas länger als der Abschnitt in radialer Richtung, der beträgt beispielsweise 2 mm. An diesen Abschnitt schließt sich sodann wiederum ein Abschnitt an, an dem die Härte stetig zunimmt, bis an der Axialposition x₂ wiederum die Basis- und Grundhärte H₂ erreicht ist. Die Position x₂ entspricht beispielsweise 4 mm. Natürlich sind auch diese Werte lediglich beispielhaft, sie hängen von der Grunddauer der Erwärmung sowie der Tiefe, längs welcher das Erwärmungswerkzeug in die Bohrung eingeschoben wird etc. ab.

Grundsätzlich ist aber auch hier deutlich, dass auch in axialer Richtung ein weichgeglühter Bereich mit stark reduzierter Härte gegeben ist, von dem aus die Härte stetig wieder auf die Basis- und Grundhärte ansteigt.

Insgesamt bildet sich also ein an die Stirnfläche 33 anschließender Bereich 34 respektive ein Volumen aus, in dem die Härte, verglichen mit der Grund- oder Basishärte des gehärteten Zahns, deutlich reduziert ist. Das Material ist also weicher und kann etwaige Spannungen weit besser aufnehmen respektive kompensieren und damit abbauen als gehärtetes sprödes Material.

Während Fig. 4 ein Ausführungsbeispiel zeigt, bei dem nur lokal an einer Flanke, nämlich der lasttragenden Flanke 29 ein entsprechend weicher Bereich 34 ausgebildet ist, zeigt Fig. 9 ein Beispiel, bei dem der gesamte Zahn 28, also über seine gesamte Breite respektive in Umfangsrichtung, weich eingestellt ist. Die Temperaturbehandlung, also das Anlassen, erfolgte hier derart, dass der gesamte Zahn über seine Breite und im gezeigten Beispiel über seine gesamte Höhe auf die entsprechende Anlasstemperatur gebracht wird, so dass sich über das gesamte Zahnvolumen die entsprechende Gefügeänderung einstellt, mithin also ein weicheres Gefüge gegeben ist als im daran anschließenden Bereich, und zwar sowohl in axialer als auch in radialer Richtung.

Die Härteverläufe in radialer Richtung sowohl in axialer Richtung entsprechen jedoch gleichermaßen den Verläufen, wie in den Fig. 6 und 8 gezeigt. Auch hier ist in radialer Richtung ausgehend von der Zahnkopffläche in radialer Richtung gesehen ein Bereich niedriger Härte gegeben, wobei sich dieser Bereich beispielsweise nahezu über die gesamte Zahnhöhe erstreckt. Daran schließt sich der Übergangsbereich an, in dem die Härte wieder ansteigt, bis die Grund- oder Basishärte erreicht ist.

Gleiches gilt in axialer Richtung, wobei sich hier die entsprechenden Härteverläufe, wie in Fig. 8 gezeigt, sowohl an der lasttragenden Flanke 29, wo die Härtewerte gemessen werden können, als auch an der vorlaufenden, nicht lasttragenden Flanke 30, die in diesem Fall ja ebenfalls temperaturbehandelt ist und an der die Härtewerte ebenfalls gemessen werden können, ergeben.

An beiden Zahnflanken 29, 30 schließt sich dann der entsprechenden Abschnitt an, in dem das gehärtete, nicht nachträglich thermisch angelassene Zahnmaterial vorliegt, mithin also wieder die hohen Härtewerte gegeben sind.

Fig. 10 zeigt schließlich ein Ausführungsbeispiel, bei dem anstelle einer asymmetrischen Verzahnung eine symmetrische Verzahnung, exemplarisch eine Evolventenverzahnung, gezeigt ist. Bei dieser Ausgestaltung sei wiederum angenommen, dass ein relativ breiter Zahn vorgesehen ist, wobei an beiden Zahnflanken 29, 30 die Erwärmung stattfand, mithin also ein Temperatureintrag erfolgte. Es bildet sich ein beidseits gegebener, weicher Bereich 34 aus, der sich über den gesamten Zahnkopf auch in Umfangsrichtung erstreckt, hier jedoch im Querschnitt gesehen eine sattelförmige Geometrie aufweist. Auch hier sind die entsprechenden Härteverläufe in radialer Richtung sowie in axialer Richtung gegeben, wobei die axiale Härtevariation wie gesagt an beiden Zahnflanken 29, 30 gegeben ist. Radial gesehen ändert sich natürlich, bezogen auf die jeweilige Umfangsposition, der Härteverlauf etwas, resultierend aus der Sattelform des Bereichs 34.

In Umfangsrichtung ist entweder im Bereich des Zahnkopfes eine konstante, niedrige Härte gegeben, oder im Bereich des Zahnfußes ein Weich-Hart-Weich-Härteverlauf, ebenfalls resultierend aus der Sattelform.

Bei einer derartigen Evolventenverzahnung respektive symmetrischen Verzahnung, die an beiden Flanken 29, 30 belastet werden kann, bietet sich eine solche beidseitige Härtereduktion zum Spannungsspitzenabbau an.

Denkbar ist es natürlich auch, den Zahn im Bereich der Stirnseite komplett über seine Breite weichzuglühen.

Die entsprechende Härteeinstellung erfolgt bevorzugt natürlich an beiden Stirnseiten des jeweiligen Schneckenelements, um beidseits gegebene Spannungsspitzen abbauen zu können. Dies gilt für alle beschriebenen Beispiele.

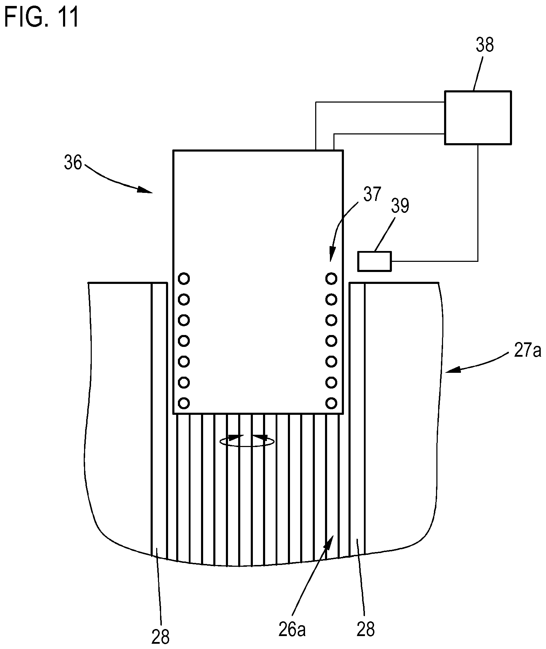

Fig. 11 zeigt schließlich in Form einer Prinzipdarstellung ein Ausführungsbeispiel zur Erzeugung der entsprechenden weichgeglühten Bereiche. Gezeigt ist exemplarisch ein Extruderschneckenelement, hier das Schneckenelement 27a mit seiner Innenverzahnung 26a, wobei hier in dieser Schnittdarstellung zwei Zähne 28 gezeigt sind.

Zum Anlassen respektive Weichglühen ist hier eine Heizeinrichtung 36 umfassend eine Induktionsspule 37, die über eine entsprechende Steuerungseinrichtung 38 angesteuert respektive bestromt wird, vorgesehen. Die Induktionsspule 37 wird mit ihrem vorderen Abschnitt, in dem die entsprechenden Windungen vorgesehen sind, in die Bohrung des Extruderschneckenelements 27a eingeschoben und positioniert. Die Eintauchtiefe definiert letztlich die axiale Erstreckung des weichgeglühten Bereichs. Die Induktionsspule 37 befindet sich möglichst eng an den Zähnen 28.

Zum Erwärmen wird nun, über die Steuerungseinrichtung 38 gesteuert, die Induktionsspule 37 bestromt, so dass sich ein Magnetfeld aufbaut, das zur Induktion von Wirbelströmen in den Zähnen 28 respektive der Innenverzahnung 26a führt. Bevorzugt findet eine Rotation der Induktionsspule 37 statt, wie durch den Doppelpfeil dargestellt ist, es kann sich auch um eine revolvierende Bewegung handeln, wobei aus dieser Bewegung eine Variation des Magnetfelds resultiert, was für eine bessere Erwärmung respektive Induktion vorteilhaft ist.

Vorgesehen ist des Weiteren eine Messeinrichtung 39, beispielsweise ein Pyrometer, über das beispielsweise die Oberflächentemperatur einer Zahnflanke erfasst wird. Hieraus kann beispielsweise die Steuerungseinrichtung 38 unter Verwendung eines geeigneten Modells ermitteln, wie der Grad der Erwärmung ist respektive wie das Erwärmungsprofil aussieht, um darauf gestützt abzuleiten, wie die Gefügeumwandlung fortschreitet respektive wie sich der weichgeglühte Bereich 34 sukzessive ausbildet. Gestützt hierauf können auch entsprechende Betriebsparameter wie Stromstärke und Heizdauer und Ähnliches ermittelt werden.

Nach Durchführung der Wärmebehandlung, wenn also die Gefügeumwandlung stattgefunden hat, wird die Induktionsspule 37 wieder entnommen, das Material kühlt auf Raumtemperatur ab. Längs der Zähne 28 hat sich sodann im Bereich des Endes des Schneckenelements 27a der jeweilige weichgeglühte Bereich 34 ausgebildet, das sonstige Zahnmaterial, das benachbart respektive anschließend zu dem thermisch behandelten Bereich vorhanden ist, ist in seiner Härte natürlich unverändert.

Anstelle der gezeigten Induktionsspule 37 ist es natürlich auch denkbar, beispielsweise einen Laser zu verwenden, über den gezielt lokal die Energie eingetragen werden kann, um die Erwärmung vorzunehmen. Dieser Laser lässt sich ebenfalls sehr gut steuern, so dass eine gezielte lokale Weichglühung erfolgen an.

Alternativ kann auch ein Widerstandsheizelement verwendet werden, das beispielsweise eine komplementäre Außenverzahnung aufweist, mit der es in die Innenverzahnung des Schneckenelements 27a eingeschoben werden kann.

Unabhängig vom Verwendeten Heizwerkzeug ist es möglich, beide Enden des Nabenbauteils simultan mit jeweils einem Werkzeug zu bearbeiten, um beidseits entsprechende weichgeglühte Zahnbereiche auszubilden.

## Patentansprüche

1. Nabenbauteil für eine Welle-Nabe-Verbindung, umfassend eine in einer Bohrung ausgebildete, sich axial von einem Ende der Bohrung zum anderen Ende erstreckende Innenverzahnung mit mehreren gehärteten, eine Grundhärte aufweisenden Zähnen und dazwischen vorgesehenen Nuten, **dadurch gekennzeichnet, dass** die Härte jedes Zahns (28) nur an wenigstens einem Ende zumindest an einer Zahnflanke (29, 30) lokal niedriger ist als im Bereich der die Grundhärte aufweisenden Längsmitte des Zahns (28) ist.

2. Nabenbauteil nach Anspruch 1, **dadurch gekennzeichnet, dass** die Zahnflanke die im Betrieb lasttragende Zahnflanke (29) ist.

3. Nabenbauteil nach Anspruch 1 oder 2, **dadurch gekennzeichnet, dass** die Härte jedes Zahns (28) auch am anderen Ende zumindest an einer Zahnflanke (29, 30) niedriger ist als im Bereich der Längsmitte des Zahns (28) ist.

4. Nabenbauteil nach Anspruch 3, **dadurch gekennzeichnet, dass** die Zahnflanke die der lasttragenden Zahnflanke (29) gegenüberliegende Zahnflanke (30) des Zahns (28) ist.

5. Nabenbauteil nach einem der vorangehenden Ansprüche, **dadurch gekennzeichnet, dass** die Härte in axialer und radialer Richtung zunimmt.

6. Nabenbauteil nach Anspruch 5, **dadurch gekennzeichnet, dass** die Härte in Umfangsrichtung zur gegenüberliegenden Zahnflanke (29, 30) zunimmt.

7. Nabenbauteil nach einem der Ansprüche 1 bis 5, **dadurch gekennzeichnet, dass** die Härte an beiden einander gegenüberliegenden Zahnflanken (29, 30) jedes Zahns (28) niedriger ist als im Bereich der Längsmitte des Zahns (28).

8. Nabenbauteil nach Anspruch 7, **dadurch gekennzeichnet, dass** die Härte von beiden Zahnflanken (29, 30) zur Zahnmitte hin zunimmt, oder dass der Zahn (28) über seine Breite zumindest im Bereich des Zahnkopfes eine im wesentlichen konstante Härte aufweist.

9. Nabenbauteil nach einem der vorangehenden Ansprüche, **dadurch gekennzeichnet, dass** die Härte in radialer Richtung wenigstens über die halbe, vorzugsweise die ganze Zahnhöhe niedriger ist.

10. Nabenbauteil nach einem der vorangehenden Ansprüche, **dadurch gekennzeichnet, dass** sich der Bereich der erniedrigten Härte bis in den Bereich des Zahnfußes (Z) oder darüber hinaus erstreckt.

11. Nabenbauteil nach einem der vorangehenden Ansprüche, **dadurch gekennzeichnet, dass** die Härte jedes Zahns (28) an dem oder den Enden um wenigstens 5%, vorzugsweise um wenigstens 10% niedriger ist als im Bereich der Längsmitte.

12. Nabenbauteil nach einem der vorangehenden Ansprüche, **dadurch gekennzeichnet, dass** die Zähne (28) ein symmetrisches oder ein asymmetrisches Querschnittsprofil aufweisen.

13. Nabenbauteil nach einem der vorangehenden Ansprüche, **dadurch gekennzeichnet, dass** es ein auf eine, eine Außenverzahnung (16, 25a, 25b) aufweisende, Extruderwelle (12, 24a, 24b) aufschiebbares Extruderschneckenelement (17a, 17b, 17c, 27a, 27b) ist.

14. Welle-Nabe-Anordnung, umfassend eine Welle (12, 24a, 24b) mit einer axial verlaufenden Außenverzahnung (16, 25a, 25b) sowie wenigstens ein auf die Welle (12, 24a, 24b) aufschiebbares oder aufgeschobenes Nabenbauteil (17a, 17b, 17c, 27a, 27b) nach einem der vorangehenden Ansprüche.

15. Welle-Nabe-Anordnung nach Anspruch 14, **dadurch gekennzeichnet, dass** die Härte der Zähne der Innenverzahnung (22a, 22b, 22c, 26a, 26b) im weicheren Bereich (34) an dem oder den Enden um wenigstens 3%, vorzugsweise um wenigstens 5%, insbesondere um wenigstens 10% niedriger ist als die Härte der Zähne der Außenverzahnung (16, 25a, 25b) der Welle (12, 24a, 24b).

16. Welle-Nabe-Anordnung nach Anspruch 14 oder 15, **dadurch gekennzeichnet, dass** die Anordnung eine Extruderschnecke (11, 23a, 23b)ist, wobei die Welle eine Extruderwelle (12, 24a, 24b) ist und mehrere Nabenbauteile in Form von auf die Außenverzahnung (16, 25a, 25b) der Extruderwelle (12, 24a, 24b) lösbar aufschiebbaren oder aufgeschobenen Extruderschneckenelemente (17a, 17b, 17c, 27a, 27b) vorgesehen sind.

17. Verfahren zur Herstellung eines Nabenbauteils nach einem der Ansprüche 1 bis 13, wobei das Nabenbauteil eine in einer Bohrung ausgebildete, sich axial von einem Ende der Bohrung zum anderen Ende erstreckenden Innenverzahnung mit mehreren Zähnen und dazwischen vorgesehenen Nuten aufweist, **dadurch gekennzeichnet, dass** die gehärteten Zähne (28) an wenigstens einem Ende zumindest an einer Zahnflanke (29, 30) derart erwärmt werden, dass sich im erwärmten Bereich eine Härte einstellt, die niedriger ist als im Bereich der Längsmitte des Zahns (28) ist.

18. Verfahren nach Anspruch 17, **dadurch gekennzeichnet, dass** die Erwärmung zumindest an der im Betrieb lasttragenden Zahnflanke (29) erfolgt.

19. Verfahren nach Anspruch 17 oder 18, **dadurch gekennzeichnet, dass** die Zähne (28) auch am anderen Ende zumindest an einer Zahnflanke (29, 30) derart erwärmt werden, dass sich im erwärmten Bereich eine Härte einstellt, die niedriger ist als im Bereich der Längsmitte des Zahns (28) ist.

20. Verfahren nach Anspruch 19, **dadurch gekennzeichnet, dass** die Erwärmung an der der lasttragenden Zahnflanke (29) gegenüberliegenden Zahnflanke (30) des Zahns (28) erfolgt.

21. Verfahren nach einem der Ansprüche 17 bis 20, **dadurch gekennzeichnet, dass** die Erwärmung derart erfolgt, dass die Härte in axialer und radialer Richtung zunimmt, und/oder dass die Härte in Umfangsrichtung zur gegenüberliegenden Zahnflanke (29, 30) zunimmt.

22. Verfahren nach einem der Ansprüche 17 bis 20, **dadurch gekennzeichnet, dass** die Erwärmung derart erfolgt, dass die Härte an beiden einander gegenüberliegenden Zahnflanken (29, 30) jedes Zahns (28) niedriger ist als im Bereich der Längsmitte des Zahns (28), und dass entweder die Härte von beiden Zahnflanken (29, 30) zur Zahnmitte hin zunimmt, oder dass der (28) Zahn über seine Breite zumindest im Bereich des Zahnkopfes eine im wesentlichen konstante Härte aufweist.

23. Verfahren nach einem der Ansprüche 17 bis 22, **dadurch gekennzeichnet, dass** die Erwärmung derart erfolgt, dass sich der Bereich der erniedrigten Härte bis in den Bereich des Zahnfußes (Z) oder darüber hinaus erstreckt.

24. Verfahren nach einem der Ansprüche 17 bis 23, **dadurch gekennzeichnet, dass** die Erwärmung derart erfolgt, dass die Härte jedes Zahns (28) an dem oder den Enden um wenigstens 5%, vorzugsweise um wenigstens 10% niedriger ist als im Bereich der Längsmitte, wobei die Härte im Bereich der Längsmitte vorzugsweise zwischen 55-65 HRC und im Bereich des oder der Enden zwischen 45-52 HRC beträgt.

25. Verfahren nach einem der Ansprüche 17 bis 24, **dadurch gekennzeichnet, dass** zum Erwärmen wenigstens eine Induktionsspule (37), die endseitig in das Nabenbauteil (17a, 17b, 17c, 27a, 27b) eingeführt oder positioniert wird, verwendet wird, wobei vorzugsweise die Induktionsspule (37) und das Nabenbauteil (17a, 17b, 17c, 27a, 27b) während der Erwärmung relativ zueinander rotieren.

26. Verfahren nach einem der Ansprüche 17 bis 24, **dadurch gekennzeichnet, dass** zum Erwärmen wenigstens ein Laser verwendet wird.

## Claims

1. Hub component for a shaft/hub connection, comprising an internal spline system which is configured in a bore, extends axially from one end of the bore to the other end, and has a plurality of hardened teeth which have a base hardness and grooves which are provided between them, **characterized in that** the hardness of each tooth (28) is locally lower only at at least one end at least on one tooth flank (29, 30) than in the region of the longitudinal centre of the tooth (28), which longitudinal centre has the base hardness.

2. Hub component according to Claim 1, **characterized in that** the tooth flank is the tooth flank (29) which is load-bearing during operation.

3. Hub component according to Claim 1 or 2, **characterized in that** the hardness of each tooth (28) is also lower at the other end at least on one tooth flank (29, 30) than in the region of the longitudinal centre of the tooth (28).

4. Hub component according to Claim 3, **characterized in that** the tooth flank is that tooth flank (30) of the tooth (28) which lies opposite the load-bearing tooth flank (29).

5. Hub component according to one of the preceding claims, **characterized in that** the hardness increases in the axial and radial direction.

6. Hub component according to Claim 5, **characterized in that** the hardness increases in the circumferential direction towards the opposite tooth flank (29, 30).

7. Hub component according to one of Claims 1 to 5, **characterized in that** the hardness is lower on the two tooth flanks (29, 30) of each tooth (28) which lie opposite one another than in the region of the longitudinal centre of the tooth (28).

8. Hub component according to Claim 7, **characterized in that** the hardness of the two tooth flanks (29, 30) increases towards the tooth centre, or **in that** the tooth (28) has a substantially constant hardness over its width at least in the region of the tooth tip.

9. Hub component according to one of the preceding claims, **characterized in that** the hardness is lower in the radial direction at least over half the tooth height, preferably the entire tooth height.

10. Hub component according to one of the preceding claims, **characterized in that** the region of the decreased hardness extends as far as into the region of the tooth root (Z) or beyond it.

11. Hub component according to one of the preceding claims, **characterized in that** the hardness of each tooth (28) is lower by at least 5%, preferably by at least 10%, at the end or ends than in the region of the longitudinal centre.

12. Hub component according to one of the preceding claims, **characterized in that** the teeth (28) have a symmetrical or an asymmetrical cross-sectional profile.

13. Hub component according to one of the preceding claims, **characterized in that** it is an extruder screw element (17a, 17b, 17c, 27a, 27b) which can be pushed over an extruder shaft (12, 24a, 24b) which has an external spline system (16, 25a, 25b).

14. Shaft/hub arrangement, comprising a shaft (12, 24a, 24b) with an axially running external spline system (16, 25a, 25b) and at least one hub component (17a, 17b, 17c, 27a, 27b) according to one of the preceding claims which is pushed or can be pushed onto the shaft (12, 24a, 24b).

15. Shaft/hub arrangement according to Claim 14, **characterized in that** the hardness of the teeth of the internal spline system (22a, 22b, 22c, 26a, 26b) in the softer region (34) at the end or ends is lower by at least 3%, preferably by at least 5%, in particular by at least 10% than the hardness of the teeth of the external spline system (16, 25a, 25b) of the shaft (12, 24a, 24b).

16. Shaft/hub arrangement according to Claim 14 or 15, **characterized in that** the arrangement is an extruder screw (11, 23a, 23b), the shaft being an extruder shaft (12, 24a, 24b), and a plurality of hub components being provided in the form of extruder screw elements (17a, 17b, 17c, 27a, 27b) which are pushed or can be pushed releasably onto the external spline system (16, 25a, 25b) of the extruder shaft (12, 24a, 24b).

17. Method for producing a hub component according to one of Claims 1 to 13, the hub component having an internal spline system which is configured in a bore, extends axially from one end of the bore to the other end, and has a plurality of teeth and grooves which are provided between them, **characterized in that** the hardened teeth (28) are heated at at least one end at least on one tooth flank (29, 30) in such a way that a hardness is set in the heated region, which hardness is lower than in the region of the longitudinal centre of the tooth (28).

18. Method according to Claim 17, **characterized in that** the heating takes place at least on the tooth flank (29) which is load-bearing during operation.

19. Method according to Claim 17 or 18, **characterized in that** the teeth (28) are also heated at the other end at least on one tooth flank (29, 30) in such a way that a hardness is set in the heated region, which hardness is lower than in the region of the longitudinal centre of the tooth (28).

20. Method according to Claim 19, **characterized in that** the heating takes place on that tooth flank (30) of the tooth (28) which lies opposite the load-bearing tooth flank (29).

21. Method according to one of Claims 17 to 20, **characterized in that** the heating takes place in such a way that the hardness increases in the axial and radial direction, and/or **in that** the hardness increases in the circumferential direction towards the opposite tooth flank (29, 30).

22. Method according to one of Claims 17 to 20, **characterized in that** the heating takes place in such a way that the hardness is lower at the two tooth flanks (29, 30) of each tooth (28) which lie opposite one another than in the region of the longitudinal centre of the tooth (28), and **in that** either the hardness of the two tooth flanks (29, 30) increases towards the tooth centre, or **in that** the tooth (28) has a substantially constant hardness over its width at least in the region of the tooth tip.

23. Method according to one of Claims 17 to 22, **characterized in that** the heating takes place in such a way that the region of the decreased hardness extends as far as into the region of the tooth root (Z) or beyond it.

24. Method according to one of Claims 17 to 23, **characterized in that** the heating takes place in such a way that the hardness of each tooth (28) is lower by at least 5%, preferably by at least 10% at the end or ends than in the region of the longitudinal centre, the hardness preferably being between 55-65 HRC in the region of the longitudinal centre and being between 45-52 HRC in the region of the end or ends.

25. Method according to one of Claims 17 to 24, **characterized in that** at least one induction coil (37) which is positioned or introduced on the end side into the hub component (17a, 17b, 17c, 27a, 27b) is used for the heating, the induction coil (37) and the hub component (17a, 17b, 17c, 27a, 27b) preferably rotating relative to one another during the heating.

26. Method according to one of Claims 17 to 24, **characterized in that** at least one laser is used for the heating.

## Revendications

1. Elément de moyeu pour une liaison arbre-moyeu, comprenant une denture intérieure formée dans un alésage et s'étendant axialement d'une extrémité de l'alésage à l'autre extrémité, avec plusieurs dents durcies présentant une dureté de base et des rainures prévues entre celles-ci, **caractérisé en ce que** la dureté de chaque dent (28) n'est qu'au moins à une extrémité au moins sur un flanc de dent (29, 30) localement moins élevée que dans la région du milieu longitudinal de la dent (28) qui présente la dureté de base.

2. Elément de moyeu selon la revendication 1, **caractérisé en ce que** le flanc de dent est le flanc de dent (29) qui en fonctionnement porte la charge.

3. Elément de moyeu selon une revendication 1 ou 2, **caractérisé en ce que** la dureté de chaque dent (28) est également à l'autre extrémité au moins sur un flanc de dent (29, 30) moins élevée que dans la région du milieu longitudinal de la dent (28).

4. Elément de moyeu selon la revendication 3, **caractérisé en ce que** le flanc de dent est le flanc de dent (30) de la dent (28) opposé au flanc de dent qui porte la charge (29).

5. Elément de moyeu selon l'une quelconque des revendications précédentes, **caractérisé en ce que** la dureté augmente en direction axiale et radiale.

6. Elément de moyeu selon la revendication 5, **caractérisé en ce que** la dureté augmente en direction périphérique vers le flanc de dent opposé (29, 30).

7. Elément de moyeu selon l'une quelconque des revendications 1 à 5, **caractérisé en ce que** la dureté sur les deux flancs de dent opposés (29, 30) de chaque dent (28) est moins élevée que dans la région du milieu longitudinal de la dent (28).

8. Elément de moyeu selon la revendication 7, **caractérisé en ce que** la dureté augmente depuis les deux flancs de dent (29, 30) en direction du milieu de dent, ou **en ce que** la dent (28) présente sur sa largeur au moins dans la région de la tête de dent une dureté essentiellement constante.

9. Elément de moyeu selon l'une quelconque des revendications précédentes, **caractérisé en ce que** la dureté est en direction radiale moins élevée au moins sur la moitié, de préférence sur la totalité de la hauteur de la dent.

10. Elément de moyeu selon l'une quelconque des revendications précédentes, **caractérisé en ce que** la région de dureté réduite s'étend jusque dans la région du pied de la dent (Z) ou au-delà.

11. Elément de moyeu selon l'une quelconque des revendications précédentes, **caractérisé en ce que** la dureté de chaque dent (28) est à la ou aux extrémité(s) moins élevée d'au moins 5 %, de préférence d'au moins 10 %, que dans la région du milieu longitudinal.

12. Elément de moyeu selon l'une quelconque des revendications précédentes, **caractérisé en ce que** les dents (28) présentent un profil de section transversale symétrique ou asymétrique.

13. Elément de moyeu selon l'une quelconque des revendications précédentes, **caractérisé en ce qu'**il est un élément de vis d'extrudeuse (17a, 17b, 17c, 27a, 27b) pouvant être engagé sur un arbre d'extrudeuse (12, 24a, 24b) présentant une denture extérieure (16, 25a, 25b).

14. Agencement arbre-moyeu, comprenant un arbre (12, 24a, 24b) avec une denture extérieure s'étendant axialement (16, 25a, 25b) ainsi qu'au moins un élément de moyeu (17a, 17b, 17c, 27a, 27b) selon l'une quelconque des revendications précédentes, qui peut être ou qui est engagé sur l'arbre (12, 24a, 24b).

15. Agencement arbre-moyeu selon la revendication 14, **caractérisé en ce que** la dureté des dents de la denture intérieure (22a, 22b, 22c, 26a, 26b) est moins élevée dans la région plus douce (34) à la ou aux extrémité(s), d'au moins 3 %, de préférence d'au moins 5 %, en particulier d'au moins 10 %, que la dureté des dents de la denture extérieure (16, 25a, 25b) de l'arbre (12, 24a, 24b) .

16. Agencement arbre-moyeu selon une revendication 14 ou 15, **caractérisé en ce que** l'agencement est une vis d'extrudeuse (11, 23a, 23b), dans lequel l'arbre est un arbre d'extrudeuse (12, 24a, 24b) et il est prévu plusieurs éléments de moyeu sous la forme d'éléments de vis d'extrudeuse (17a, 17b, 17c, 27a, 27b) pouvant être ou étant engagés de façon séparable sur la denture extérieure (16, 25a, 25b) de l'arbre d'extrudeuse (12, 24a, 24b).

17. Procédé de fabrication d'un élément de moyeu selon l'une quelconque des revendications 1 à 13, dans lequel l'élément de moyeu présente une denture intérieure formée dans un alésage et s'étendant axialement d'une extrémité de l'alésage jusqu'à l'autre extrémité avec plusieurs dents et des rainures prévues entre celles-ci, **caractérisé en ce que** l'on chauffe les dents durcies (28) à au moins une extrémité au moins sur un flanc de dent (29, 30), de telle manière qu'il s'établisse dans la région chauffée une dureté, qui est moins élevée que dans la région du milieu longitudinal de la dent (28).

18. Procédé selon la revendication 17, **caractérisé en ce que** l'on effectue le chauffage au moins sur le flanc de dent qui en fonctionnement porte la charge (29).

19. Procédé selon une revendication 17 ou 18, **caractérisé en ce que** l'on chauffe également les dents (28) à l'autre extrémité au moins sur un flanc de dent (29, 30), de telle manière qu'il s'établisse dans la région chauffée une dureté, qui est moins élevée que dans la région du milieu longitudinal de la dent (28).

20. Procédé selon la revendication 19, **caractérisé en ce que** l'on effectue le chauffage sur le flanc de dent (30) de la dent (28) opposé au flanc de dent qui porte la charge (29).

21. Procédé selon l'une quelconque des revendications 17 à 20, **caractérisé en ce que** l'on effectue le chauffage de telle manière que la dureté augmente en direction axiale et radiale, et/ou **en ce que** la dureté augmente en direction périphérique vers le flanc de dent opposé (29, 30) .

22. Procédé selon l'une quelconque des revendications 17 à 20, **caractérisé en ce que** l'on effectue le chauffage de telle manière que la dureté sur les deux flancs de dent opposés l'un à l'autre (29, 30) de chaque dent (28) soit moins élevée que dans la région du milieu longitudinal de la dent (28), et que la dureté des deux flancs de dent (29, 30) augmente en direction du milieu de dent ou que la dent (28) présente sur sa largeur une dureté essentiellement constante au moins dans la région de la tête de dent.

23. Procédé selon l'une quelconque des revendications 17 à 22, **caractérisé en ce que** l'on effectue le chauffage de telle manière que la région de dureté réduite s'étende jusque dans la région du pied de dent (Z) ou au-delà.

24. Procédé selon l'une quelconque des revendications 17 à 23, **caractérisé en ce que** l'on effectue le chauffage de telle manière que la dureté de chaque dent (28) à la ou aux extrémité(s) soit moins élevée d'au moins 5 %, de préférence d'au moins 10 % que dans la région du milieu longitudinal, dans lequel la dureté dans la région du milieu longitudinal vaut de préférence entre 55-65 HRC et dans la région de la ou des extrémité (s) entre 45-52 HRC.

25. Procédé selon l'une quelconque des revendications 17 à 24, **caractérisé en ce que** l'on utilise pour le chauffage au moins une bobine d'induction (37), qui est insérée ou positionnée en extrémité dans l'élément de moyeu (17a, 17b, 17c, 27a, 27b), dans lequel la bobine d'induction (37) et l'élément de moyeu (17a, 17b, 17c, 27a, 27b) tournent de préférence l'un par rapport à l'autre pendant le chauffage.

26. Procédé selon l'une quelconque des revendications 17 à 24, **caractérisé en ce que** l'on utilise au moins un laser pour le chauffage.
